(19) Europäisches Patentamt
European Patent Office
Office européen des brevets

(11) EP 3 951 985 A1

(12) EUROPEAN PATENT APPLICATION
published in accordance with Art. 153(4) EPC

(43) Date of publication:
**09.02.2022 Bulletin 2022/06**

(21) Application number: **20858444.1**

(22) Date of filing: **25.08.2020**

(51) International Patent Classification (IPC):
***H01M 10/0563*** *(2010.01)* ***H01M 4/587*** *(2010.01)*
***H01M 4/1393*** *(2010.01)* ***H01M 4/04*** *(2006.01)*
***H01M 4/58*** *(2010.01)* ***H01M 10/0525*** *(2010.01)*

(52) Cooperative Patent Classification (CPC):
**H01M 4/04; H01M 4/1393; H01M 4/58; H01M 4/587; H01M 10/0525; H01M 10/0563;**
Y02E 60/10

(86) International application number:
**PCT/KR2020/011338**

(87) International publication number:
**WO 2021/040386 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.08.2019 KR 20190104733**
**24.08.2020 KR 20200106330**

(71) Applicants:
- **LG ENERGY SOLUTION, LTD.**
  **Seoul 07335 (KR)**
- **IUCF-HYU (INDUSTRY-UNIVERSITY COOPERATION FOUNDATION HANYANG UNIVERSITY)**
  **Seoul 04763 (KR)**

(72) Inventors:
- **KIM, Jeong Gil**
  **Daejeon 34122 (KR)**
- **JUNG, Bum Young**
  **Daejeon 34122 (KR)**
- **KIM, Han Su**
  **Seoul 07214 (KR)**
- **KIM, A Young**
  **Seoul 07342 (KR)**
- **JUNG, Ho Jae**
  **Suwon-si Gyeonggi-do 16293 (KR)**
- **LEE, Ji Whan**
  **Gwacheon-si Gyeonggi-do 13818 (KR)**

(74) Representative: **Hoffmann Eitle**
**Patent- und Rechtsanwälte PartmbB**
**Arabellastraße 30**
**81925 München (DE)**

# (54) LITHIUM SECONDARY BATTERY AND METHOD FOR MANUFACTURING SAME

(57) The present invention relates to a lithium secondary battery comprising a pre-lithiated carbon-based anode, a cathode, a separator, and an inorganic electrolyte represented by chemical formula 1 below, and a method for manufacturing same. [Chemical formula 1] $LiMX\text{-}n(SO_2)$, in chemical formula 1, M is at least one selected from among an alkaline metal, a transition metal, and a post transition metal; X is a halogen element; and n is an integer of 1 to 4.

FIG. 1

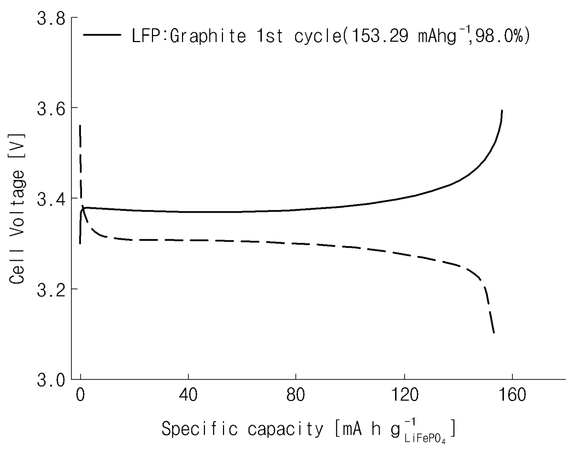


EP 3 951 985 A1

## Description

## TECHNICAL FIELD

### Cross-reference to Related Applications

This application claims priority from Korean Patent Application Nos. 2019-0104733, filed on August 26, 2019, and 2020-0106330, filed on August 24, 2020, the disclosures of which are incorporated by reference herein.

### Technical Field

The present invention relates to a lithium secondary battery and a method of preparing the same, and particularly, to a lithium secondary battery, in which capacity characteristics and cycle characteristics are improved by including a pre-lithiated carbon-based negative electrode and a sulfur dioxide-based inorganic electrolyte, and a method of preparing the same.

## BACKGROUND ART

Applications of lithium secondary batteries have been rapidly expanded from power sources of portable devices, such as mobile phones, notebook computers, digital cameras, and camcorders, to power sources of medium and large sized devices such as power tools, electric bicycles, hybrid electric vehicles (HEVs), and plug-in hybrid electric vehicles (plug-in HEVs, PHEVs).

Since a lithium ion secondary battery has the theoretically highest energy density and may be miniaturized to be applicable to a personal IT device, it has been proposed as a battery that may be used in various fields such as electric vehicles and power storage devices.

A lithium secondary battery is composed of a negative electrode including a negative electrode active material, a positive electrode including a positive electrode active material, and an electrolyte solution, wherein research on the electrolyte solution is being actively conducted as the electrolyte solution, among them, is known as a component that has a significant influence on stability and capacity characteristics of the lithium secondary battery.

Currently, an organic electrolyte solution is mostly used as the electrolyte solution, wherein, since the electrolyte solution is depleted when the organic electrolyte solution is stored for a long time, it becomes a cause of degrading performance of the secondary battery, for example, lowering stability of the secondary battery.

Thus, in order to improve the electrolyte solution depletion and stability, research to use an inorganic electrolyte having high ion conductivity, flame retardancy, and excellent low-temperature properties, instead of the organic electrolyte solution, has emerged.

However, the inorganic electrolyte is disadvantageous in that capacity characteristics and cycle characteristics of the secondary battery are inferior because many irreversible reactions occur during charge and discharge.

Therefore, there is a need for research on a method which may suppress a decomposition reaction of the inorganic electrolyte and minimize irreversible capacity when a secondary battery using the inorganic electrolyte is prepared.

Prior Art Document: Korean Patent No. 2019-0007296

## DISCLOSURE OF THE INVENTION

### TECHNICAL PROBLEM

An aspect of the present invention provides a lithium secondary battery in which capacity characteristics and cycle characteristics are improved by suppressing an irreversible reaction of an inorganic electrolyte during charge and discharge.

Another aspect of the present invention provides a method of preparing the lithium secondary battery.

### TECHNICAL SOLUTION

According to an aspect of the present invention, there is provided a lithium secondary battery including:

a pre-lithiated carbon-based negative electrode, a positive electrode, a separator, and
an inorganic electrolyte represented by Formula 1.

[Formula 1] $LiMX_n (SO_2)$

In Formula 1,
M is at least one metal selected from an alkali metal, a transition metal, and a post-transition metal,
X is a halogen element, and
n is an integer of 1 to 4.
30% to 90% of capacity based on total capacity of a negative electrode active material of the pre-lithiated carbon-based negative electrode may be lithiated by pre-lithiation.

Also, the positive electrode may include a lithium transition metal phosphate.
Furthermore, the inorganic electrolyte may be $LiAlCl_4$-$3SO_2$.
According to another aspect of the present invention, there is provided a method of preparing the lithium secondary battery of the present invention which includes:

preparing a pre-lithiated carbon-based negative electrode;
preparing an electrode assembly by sequentially stacking the pre-lithiated carbon-based negative electrode, a separator, and a positive electrode; and
inserting the electrode assembly into a battery case and injecting an inorganic electrolyte represented by Formula 1.

[Formula 1] $LiMX_n (SO_2)$

In Formula 1,
M is at least one metal selected from an alkali metal, a transition metal, and a post-transition metal, X is a halogen element, and
n is an integer of 1 to 4.

## ADVANTAGEOUS EFFECTS

According to the present invention, since a solid electrolyte interface (SEI) is formed in advance on a surface of a carbon-based negative electrode through pre-lithiation before charge/discharge processes, a decomposition reaction of an inorganic electrolyte, which is accompanied in a process of forming the SEI, is suppressed and irreversible capacity is minimized, and thus, a lithium secondary battery having improved capacity characteristics and cycle characteristics may be prepared.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is a graph illustrating a result of observing charge and discharge capacities of a lithium secondary battery prepared in Example 1;
FIG. 2 is a graph illustrating a result of observing charge and discharge capacities of a lithium secondary battery prepared in Comparative Example 1;
FIG. 3 is a graph illustrating a result of observing charge and discharge capacities of a lithium secondary battery prepared in Comparative Example 2;
FIG. 4 is a graph illustrating cycle characteristics and coulombic efficiency (CE) of the lithium secondary battery prepared in Example 1;
FIG. 5 is a graph illustrating cycle characteristics and coulombic efficiency of the lithium secondary battery prepared in Comparative Example 1; and
FIG. 6 is a graph illustrating an oxidation/reduction voltage range of an inorganic electrolyte and a voltage profile of lithium iron phosphate ($LiFePO_4$).

## MODE FOR CARRYING OUT THE INVENTION

Hereinafter, the present invention will be described in more detail.
It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may comprise plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

## Lithium Secondary Battery

In the present invention, provided is a lithium secondary battery including a pre-lithiated carbon-based negative electrode, a positive electrode, a separator, and an inorganic electrolyte represented by the following Formula 1.

[Formula 1] $LiMX_n (SO_2)$

In Formula 1,

M is at least one metal selected from an alkali metal, a transition metal, and a post-transition metal, X is a halogen element, and n is an integer of 1 to 4.

### (1) Pre-lithiated Carbon-based Negative Electrode

First, a pre-lithiated carbon-based negative electrode according to the present invention will be described.

The pre-lithiated carbon-based negative electrode may be prepared by preparing a negative electrode by forming a carbon-based negative electrode active material layer on a negative electrode collector, and then performing a pre-lithiation process.

The negative electrode collector generally has a thickness of 50 μm to 300 μm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to a positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The carbon-based negative electrode active material layer may be prepared by coating the negative electrode collector with a negative electrode slurry including a carbon-based negative electrode active material as well as selectively a binder, a conductive agent, and a solvent, and then drying and rolling the coated negative electrode collector.

The carbon-based negative electrode active material may include a carbon-based material capable of reversibly intercalating/deintercalating lithium ions.

As the carbon-based material, a carbon-based negative electrode active material generally used in a lithium ion secondary battery may be used without particular limitation, and, as a typical example, crystalline carbon, amorphous carbon, or a mixture thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride (PVDF), polyvinyl alcohol, polyvinylpyrrolidone, polytetrafluoroethylene, polyethylene, polypropylene, a styrene-butadiene rubber (SBR), an ethylene-propylene-diene monomer, a fluorine rubber, or various copolymers thereof. The binder may further include a thickener such as carboxymethyl cellulose (CMC), starch, hydroxypropyl cellulose, or regenerated cellulose.

The conductive agent is a component for further improving the conductivity of the negative electrode active material, wherein the conductive agent may be added in an amount of 1 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon powder such as carbon black (e.g., Denka black), acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The solvent may include water or an organic solvent, such as NMP or alcohol, and may be used in an amount such that desirable viscosity is obtained when the negative electrode active material as well as selectively the binder and the conductive agent are included. For example, the solvent may be included in an amount such that a concentration of the solid content in the negative electrode slurry including the negative electrode active material as well as selectively the binder and the conductive agent is in a range of 50 wt% to 75 wt%, for example, 50 wt% to 65 wt%.

The pre-lithiation process may be performed by (1) a method of lithiating a surface of a negative electrode by impregnating the negative electrode and lithium (Li) metal, as a counter electrode, in an electrolyte solution, then connecting the negative electrode and the lithium metal, and inducing a short-circuit; (2) a method of directly depositing lithium in a gas state on a negative electrode by high-temperature heat treating lithium (Li) metal in a vacuum state (about 10 torr); (3) a method of lithiating a negative electrode by dispersing particles containing an excessive amount of lithium (e.g.: Stabilized Lithium Metal Powder (SLMP®)) in a binder polymer to coat the negative electrode and then passing the coated negative electrode through a press; or (4) a method of allowing lithium (Li) to be charged into a negative electrode by an electrochemical method while the negative electrode and a positive electrode containing lithium are in contact with each other and a low current is then flowed, and a more specific method will be described later in more detail below.

With respect to the pre-lithiated carbon-based negative electrode obtained through the pre-lithiation process, 30% to 90%, particularly 40% to 80%, and more particularly 50% to 75% of capacity based on total capacity of the negative electrode active material may be lithiated. In a case in which the amount of the pre-lithiation is greater than 90%, lithium metal powder may be present in the form of a metal on the negative electrode to cause a side reaction. If the amount of the pre-lithiation is less than 20%, since sufficient pre-lithiation may not be performed, an effect of suppressing a side reaction of the inorganic electrolyte may be insignificant.

### (2) Positive Electrode

The positive electrode of the present invention may include a lithium transition metal phosphate having an operating voltage of 3.9 V or less as a positive electrode active material.

Specifically, the lithium transition metal phosphate may include a lithium iron phosphate ($LiFePO_4$) which may secure high discharge capacity (170 $mAhg^{-1}$) and excellent thermal stability under an operating voltage of 3.9 V or less.

As illustrated in FIG. 6, the lithium secondary battery of the present invention is characterized in that it is operated in a voltage range of 2.9 V to 3.9 V, as a voltage range in which the inorganic electrolyte is electrochemically safe. If, in a case in which the secondary battery is operated above or below the voltage range, there is a disadvantage in that operating efficiency of the secondary battery is reduced as the inorganic electrolyte itself is oxidized and/or reduced.

Thus, the positive electrode active material of the present invention may include a lithium transition metal phosphate capable of achieving maximum reversible capacity in a voltage range in which the inorganic electrolyte may be stably operated, that is, an operating voltage of 3.9 V or less, for example, an olivine-structured lithium iron phosphate ($LiFePO_4$).

In a case in which the inorganic electrolyte and the positive electrode using the lithium transition metal phosphate as the positive electrode active material are included together, a secondary battery having improved structural safety and battery operation stability may be achieved through stable voltage behavior characteristics.

It is necessary to charge a lithium transition metal oxide, such as lithium-cobalt oxide ($LiCoO_2$), lithium nickel oxide ($LiNiO_2$), lithium-nickel-cobalt-based oxide ($LiNi_{1-Y1}Co_{Y1}O_2$ (where $0<Y1<1$), lithium-manganese-cobalt-based oxide ($LiCo_{1-Y2}Mn_{Y2}O_2$ (where $0<Y2<1$), lithium-nickel-manganese-cobalt-based oxide ($Li(Ni_xCo_yMn_z)O_2$, $0<x<1$, $0<y<1$, $0<z<1$, and $x+y+z=1$), or lithium-nickel-cobalt-transition metal (M) oxide ($Li(Ni_aCO_bMn_cM_d)O_2$ (where M is selected from the group consisting of aluminum (Al), iron (Fe), vanadium (V), chromium (Cr), titanium (Ti), tantalum (Ta), magnesium (Mg), and molybdenum (Mo), and a, b, c, and d are atomic fractions of each independent elements, wherein $0<a<1$, $0<b<1$, $0<c<1$, $0<d<1$, and $a+b+c+d=1$), which has been used as a general positive electrode active material during preparation of a lithium secondary battery, to a voltage range greater than 3.9 V in order to achieve the maximum reversible capacity.

If, in a case in which the lithium transition metal oxide is used as the positive electrode active material of the present invention, but charge is performed at 3.9 V or less where the inorganic electrolyte may be stably operated, since about 25% to 30% of total reversible capacity of the lithium transition metal oxide may not be used, capacity characteristics of the battery may be degraded. In contrast, if the lithium transition metal oxide is used as the positive electrode active material of the present invention and charge is performed to a voltage at which all of reversible capacity of the lithium transition metal oxide may be used, for example, a voltage greater than 3.9 V, since the oxidation or reduction of the inorganic electrolyte is intensified, the operating efficiency of the secondary battery may be reduced and life characteristics may be degraded.

As described above, if the inorganic electrolyte of the present invention and the lithium transition metal oxide having an operating voltage range greater than the operating voltage range of the inorganic electrolyte are used together as a positive electrode active material, it may be a factor that reduces positive electrode use efficiency. Thus, it is not desirable to use the lithium transition metal oxide as a positive electrode active material when a secondary battery using the inorganic electrolyte of the present invention is prepared.

The positive electrode may be prepared by a conventional method and used.

That is, the positive electrode includes a positive electrode collector and a positive electrode material mixture layer formed on the positive electrode collector, and, in this case, the positive electrode material mixture layer may be prepared by coating the positive electrode collector with a positive electrode slurry including a positive electrode active material as well as selectively a binder, a conductive agent, and a solvent, and then drying and rolling the coated positive electrode collector.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material may be included in an amount of 80 wt% to 99 wt%, for example, 93 wt% to 98 wt%, based on a total weight of solid content in the positive electrode slurry. In this case, when the amount of the positive electrode active material is 80 wt% or less, energy density may be decreased to reduce capacity.

The binder is a component that assists in the binding between the active material and the conductive agent and in the binding with the current collector, wherein the binder is commonly added in an amount of 1 wt% to 30 wt% based on the total weight of the solid content in the positive electrode slurry. Examples of the binder may be polyvinylidene fluoride (PVDF), polyvinyl alcohol, polyvinylpyrrolidone, polytetrafluoroethylene, polyethylene, polypropylene, a styrene-butadiene rubber, a fluorine rubber, or various copolymers.

Any conductive agent may be used as the conductive agent without particular limitation so long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent is commonly added in an amount of 1 wt% to 30 wt% based on the total weight of the solid content in the positive electrode slurry.

The solvent may include an organic solvent, such as N-methyl-2-pyrrolidone (NMP), and may be used in an amount such that desirable viscosity is obtained when the positive electrode active material as well as selectively the binder and the conductive agent are included. For example, the solvent may be included in an amount such that a concentration of the solid content in the positive electrode slurry including the positive electrode active material as well as selectively the binder and the conductive agent is in a range of 10 wt% to 70 wt%, for example, 20 wt% to 60 wt%.

### (3) Separator

In the lithium secondary battery of the present invention, the separator blocks an internal short circuit by separating the negative electrode and the positive electrode and provides a movement path of lithium ions by impregnating the non-aqueous electrolyte solution, wherein any separator may be used without particular limitation as long as it is typically used as a separator in a lithium secondary battery, but, specifically, a separator having high moisture-retention ability for an electrolyte as well as low resistance to the transfer of lithium ions may be used.

After mixing a polymer resin, a filler, and a solvent to prepare a separator composition, the separator composition is directly coated on the electrode and dried to form a separator film, or, after the separator composition is cast on a support and dried, the separator may be formed by laminating a separator film peeled from the support on the electrode.

Specifically, a typically used porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or by laminating two or more layers thereof as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

The porous separator may generally have a pore diameter of 0.01 $\mu$m to 50 $\mu$m and a porosity of 5% to 95%. Also, the porous separator may generally have a thickness of 18 $\mu$m to 300 $\mu$m.

**(4) Inorganic Electrolyte**

The lithium secondary battery of the present invention may include an inorganic electrolyte represented by the following Formula 1.

[Formula 1] LiMX_n ($SO_2$)

In Formula 1,
M is at least one metal selected from an alkali metal, a transition metal, and a post-transition metal, X is a halogen element, and n is an integer of 1 to 4.
Specifically, in Formula 1, M may be at least one metal selected from the group consisting of aluminum (Al), gallium (Ga), copper (Cu), manganese (Mn), cobalt (Co), nickel (Ni), zinc (Zn), and palladium (Pd). Also, the halogen element may be selected from the group consisting of fluorine (F), chlorine (Cl), bromine (Br), and iodine (I).
Specifically, the inorganic electrolyte may be $LiAlCl_4$-$3SO_2$.
In general, an organic electrolyte solution containing a lithium salt and an organic solvent has been used as an electrolyte solution for a lithium secondary battery, but, since the organic electrolyte solution is highly flammable, it may cause serious problems in safety during operation of the battery when the organic electrolyte solution is used. Thus, in order to improve these problems, the use of an inorganic (liquid) electrolyte solution has been proposed. With respect to the inorganic electrolyte, it is advantageous in that it has high ion conductivity, flame retardancy, and excellent low-temperature properties, but it is disadvantageous in that capacity characteristics and life characteristics are degraded because many irreversible reactions occur during charge and discharge.
Therefore, in order to solve the above-described problems, inventors of the present invention have devised a lithium secondary battery including the pre-lithiated negative electrode and the inorganic electrolyte together.
That is, since the secondary battery according to the present invention uses the pre-lithiated negative electrode, in which a solid electrolyte interface (SEI) is formed in advance on the surface of a carbon-based negative electrode through pre-lithiation, and the inorganic electrolyte together, a decomposition reaction of the inorganic electrolyte, which is accompanied in charge/discharge processes of forming the SEI on the surface of the negative electrode, may be suppressed and irreversible capacity may be minimized. Thus, the lithium secondary battery of the present invention, in which the pre-lithiated negative electrode and the inorganic electrolyte are used, may sufficiently achieve capacity even at high temperature and low temperature and may obtain an effect of operating normally.
Particularly, as illustrated in FIG. 6, the inorganic electrolyte of the present invention is characterized in that it is operated in a voltage range of 2.9 V to 3.9 V, as an electrochemically safe voltage range. In a case in which the secondary battery is operated above the voltage range, there is a disadvantage in that operating efficiency of the secondary battery is reduced as the inorganic electrolyte itself is oxidized and/or reduced.
Thus, in the present invention, positive electrode efficiency may be increased by using the positive electrode, which includes the lithium transition metal phosphate operable in the operating voltage range of the inorganic electrolyte, for example, an olivine-structured lithium iron phosphate ($LiFePO_4$), as the positive electrode active material, together.

**Method of Preparing Lithium Secondary Battery**

Also, in an embodiment of the present invention, a method of preparing a lithium secondary battery may be provided.
The method of preparing a lithium secondary battery may include the steps of: preparing a pre-lithiated carbon-based negative electrode, preparing an electrode assembly by sequentially stacking the pre-lithiated carbon-based negative electrode, a separator, and a positive electrode, and inserting the electrode assembly into a battery case and injecting the inorganic electrolyte represented by Formula 1.
In the method of the present invention, since detailed descriptions of the negative electrode, the positive electrode, the separator, and the inorganic electrolyte overlap with those described above, the descriptions thereof will be omitted.
The preparing of the pre-lithiated carbon-based negative electrode will be described in more detail below.

**(1) Preparing of the Pre-lithiated Carbon-based Negative Electrode**

Specifically, the pre-lithiated carbon-based negative electrode may be prepared by a method including the steps of: preparing a negative electrode by stacking a carbon-based negative electrode active material layer on a negative electrode collector; preparing a pre-lithiation solution; impregnating the negative electrode in the pre-lithiation solution; preparing a negative electrode stack for pre-lithiation by sequentially stacking a separator and a lithium metal, as a counter electrode, on the negative electrode; and preparing a pre-lithiated carbon-based negative electrode by performing a pre-lithiation process on the negative electrode stack.

### (1-1) Preparing of the Negative Electrode

The above pre-lithiated Carbon-based negative electrode may be prepared by a conventional method in which a carbon-based negative electrode active material layer is stacked on a negative electrode collector.

In this case, since detailed descriptions of the negative electrode collector and the carbon-based negative electrode active material layer overlap with those described above, the descriptions thereof will be omitted.

### (1-2) Preparing of the Pre-lithiation Solution

The pre-lithiation solution is a solution including an ionizable lithium salt and an organic solvent, wherein a general liquid electrolyte solution for a lithium secondary battery may be used.

The ionizable lithium salt includes $Li^+$ as a cation, and one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$ may be used as an anion.

A concentration of the ionizable lithium salt may be appropriately changed in a normally usable range, but the lithium salt may be included in a concentration of 0.8 M to 3.0 M, for example, 1.0 M to 3.0 M in the electrolyte solution to obtain an optimum effect of forming a film for preventing corrosion of the surface of the electrode.

Also, the organic solvent may include a cyclic carbonate-based organic solvent, a linear carbonate-based organic solvent, or a mixed organic solvent thereof.

The cyclic carbonate-based organic solvent is an organic solvent which may well dissociate the lithium salt in the electrolyte due to high permittivity as a highly viscous organic solvent, wherein specific examples of the cyclic carbonate-based organic solvent may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include ethylene carbonate.

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

The organic solvent may include the cyclic carbonate-based organic solvent and the linear carbonate-based organic solvent in a volume ratio of 1:9 to 5:5, for example, 2:8 to 4:6 in order to have high ionic conductivity.

Furthermore, the organic solvent may further include a linear ester-based organic solvent and/or a cyclic ester-based organic solvent, which are typically used in an electrolyte solution for a lithium secondary battery, in the cyclic carbonate-based organic solvent and/or the linear carbonate-based organic solvent.

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

Specific examples of the cyclic ester-based organic solvent may be at least one organic solvent selected from the group consisting of $\gamma$-butyrolactone, $\gamma$-valerolactone, $\gamma$-caprolactone, $\sigma$-valerolactone, and $\varepsilon$-caprolactone.

### (1-3) Impregnating of the Negative Electrode in the Pre-lithiation Solution

In the method of the present invention, after the negative electrode is prepared, the impregnating of the prepared negative electrode in the pre-lithiation solution may be performed to secure wetting to the negative electrode and simultaneously increase an efficiency of the subsequent pre-lithiation process.

The impregnating may be performed at a temperature of 10°C to 75°C for 30 minutes to 48 hours, for example, 20°C to 40°C for 30 minutes to 36 hours.

In a case in which the above impregnation conditions are satisfied, sufficient wetting of the negative electrode in the pre-lithiation solution may be secured. If the temperature is less than 10°C or the time is less than 30 minutes in the impregnating, since it is difficult to ensure a sufficient impregnation effect, lithiation efficiency may be reduced during the pre-lithiation process preformed as a subsequent process. Also, if the temperature is greater than 75°C during the impregnation process, since it is difficult to ensure uniform electrolyte solution impregnation due to volatility of the organic solvent, there is a disadvantage in that processability is reduced in the subsequent process. In addition, if the impregnating is performed within 48 hours, since the electrode is sufficiently impregnated with the electrolyte solution, there is no need to increase the impregnation time in consideration of cost and time.

### (1-4) Preparing of the Negative Electrode Stack for Pre-lithiation

Subsequently, in the present invention, a negative electrode stack for pre-lithiation may be prepared by sequentially stacking a separator and a lithium metal, as a counter electrode, on the negative electrode.

### (1-5) Preparing of the Pre-lithiated Carbon-based Negative Electrode

Then, in the present invention, a pre-lithiated negative electrode may be prepared by performing a pre-lithiation process on the negative electrode stack for pre-lithiation.

The pre-lithiation process may be performed by connecting the negative electrode active material layer of the negative electrode stack and the lithium metal, as the counter electrode, together using a wire or copper foil, adding it into a pre-lithiation solution, and inducing a short-circuit through the wire or copper foil.

The pre-lithiation solution is the pre-lithiation solution used during the impregnation of the negative electrode, wherein, since a detailed description thereof overlaps with that described above, the description thereof will be omitted.

The pre-lithiation process may be performed at 10°C to 35°C for 30 minutes to 2 hours, for example, 30 minutes to 90 minutes.

That is, an open-circuit voltage (OCV) of the negative electrode may be ensured to be in a range of 3 V or more, particularly 3.05 V to 3.29 V, and more particularly 3.20 V to 3.29 V at a state of charge (SOC) of 30% within the pre-lithiation process temperature and time ranges. Specifically, in a case in which the pre-lithiation process is performed for 30 minutes or more to less than 45 minutes, 3.26 OCV may be achieved as the OCV of the negative electrode. Also, in a case in which the pre-lithiation process is performed for 45 minutes or more to less than 1 hour, 3.26 OCV may be achieved as the OCV of the negative electrode, and, in a case in which the pre-lithiation process is performed for 1 hour or more, 3.29 OCV may be achieved as the OCV of the negative electrode. The open-circuit voltage of the negative electrode may be measured and checked by using charge/discharge equipment after assembling a full cell. In a case in which the pre-lithiation process is performed for less than 30 minutes, it is difficult to ensure the OCV of the negative electrode to be 3 V or more at an SOC of 30%.

A pre-lithiated negative electrode may be prepared by applying an appropriate pressure, for example, a pressure of 1 kgf per 1.5 $cm^2$ to 2 kgf per 1.5 $cm^2$ when the pre-lithiation process is performed.

In this case, when a pressure greater than 2 kgf is applied, since the electrode is damaged, the capacity characteristics of the secondary battery may be degraded or dangers, such as heat generation, may be caused.

A large amount of lithium to compensate for irreversible capacity loss of the negative electrode may be supplied to the negative electrode while a portion of the carbon-based negative electrode is lithiated through the pre-lithiation process. The lithium (Li-plating) electrodeposited on the negative electrode may continuously electrodeposit and release lithium ions during charge/discharge processes of the lithium secondary battery, and thus may contribute as available capacity of the negative electrode. Also, the lithium (Li-plating) electrodeposited on the negative electrode may function as an additional lithium source supplying lithium ions to the positive electrode or the negative electrode when the lithium secondary battery is degraded. Accordingly, in the lithium secondary battery according to an example of the present invention which includes the negative electrode including the electrodeposited lithium, since the electrodeposited lithium acts as an additional supplemental lithium source even without supply of a separate lithium source due to the degradation of the battery, excellent cycle characteristics may be exhibited.

The method of the present invention may further include washing the pre-lithiated negative electrode with an organic solvent, after the preparing of the pre-lithiated negative electrode.

One selected from the organic solvents used in the above-described pre-lithiation solution may be used as the organic solvent.

Also, the washing may be performed at a temperature of 10°C to 75°C, for example, 10°C to 40°C for 1 minute to 3 hours. In a case in which the temperature is less than 10°C, since the lithium salt is solidified, it may not be sufficiently cleaned, and, in a case in which the temperature is greater than 75°C, the electrode may be damaged by heat. Furthermore, in a case in which the washing time is less than 1 minute, the lithium salt may not be sufficiently cleaned, and, in a case in which the washing time is greater than 3 hours, since the electrode active material may fall off, the electrode may be damaged.

The lithium secondary battery of the present invention may be prepared according to a conventional method of preparing a lithium secondary battery which is disclosed in Korean Patent Application Laid-open Publication No. 2017-0111513 and Korean Patent Application Laid-open Publication No. 2019-0007296 except for the preparing of the pre-lithiated negative electrode.

Hereinafter, the present invention will be described in more detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

## Examples

### Example 1.

#### (Negative Electrode Preparation)

A negative electrode active material slurry was prepared by adding a negative electrode active material (graphite), a conductive agent (Denka black), a binder (SBR), and a thickener (CMC) to water in a weight ratio of 92:3:3.5:1.5. One surface of a copper current collector was coated with the prepared negative electrode active material slurry, dried, and rolled to prepare a negative electrode in which a negative electrode active material layer was stacked on the copper current collector.

Subsequently, a pre-lithiation solution was prepared by dissolving $LiPF_6$ in a solvent, in which ethylene carbonate (EC) and ethyl methyl carbonate (EMC) were mixed in a volume ratio of 3:7, such that a concentration of the $LiPF_6$ was 1 M.

The prepared negative electrode was impregnated in the pre-lithiation solution at 25°C for 12 hours or more.

Then, a negative electrode stack for pre-lithiation was prepared by sequentially stacking a separator formed of a polyethylene-based porous film and a lithium (Li) metal, as a counter electrode, on the negative electrode, and, after the negative electrode active material layer and the lithium metal, as the counter electrode, were connected through a copper wire, a pre-lithiation process was performed on the negative electrode while inducing a short-circuit in the pre-lithiation solution at 25°C for 30 minutes. In this case, a pre-lithiated negative electrode was prepared by applying a pressure of 1 kgf per 1.5 $cm^2$ to the stacked electrode during the pre-lithiation process.

Finally, the negative electrode after the completion of the pre-lithiation was washed using ethyl methyl carbonate (EMC) at 25°C for 30 minutes and then dried at room temperature to prepare a pre-lithiated negative electrode (lithiation: 50% based on total capacity of the negative electrode active material, OCV: 3.21 V).

#### (Positive Electrode Preparation)

A positive electrode active material ($LiFeO_4$), a conductive agent (carbon black), and a binder (polyvinylidene fluoride (PVDF)) were added to N-methyl-2-pyrrolidone (NMP) in a weight ratio of 90:5:5 to prepare a positive electrode active material slurry (solid content of 55 wt%). A 20 μm thick positive electrode collector (Al thin film) was coated with the positive electrode active material slurry, dried, and roll-pressed to prepare a positive electrode.

#### (Secondary Battery Preparation)

After an electrode assembly was prepared by disposing a polyethylene-based porous film between the above-prepared pre-lithiated negative electrode and positive electrode, the electrode assembly was put in a battery case and an inorganic electrolyte ($LiAlCl_4$-$3SO_2$) was injected to prepare a lithium secondary battery.

### Comparative Example 1.

#### (Negative Electrode Preparation)

A negative electrode active material slurry was prepared by adding a negative electrode active material (graphite), a conductive agent (Denka black), a binder (SBR), and a thickener (CMC) to water in a weight ratio of 92:3:3.5:1.5. One surface of a copper current collector was coated with the prepared negative electrode active material slurry, dried, and rolled to prepare a negative electrode. In this case, a pre-lithiation process was not performed on the negative electrode.

#### (Secondary Battery Preparation)

A lithium secondary battery was prepared in the same manner as in Example 1 except that the negative electrode, which was not subjected to the pre-lithiation process, was used.

**Comparative Example 2.**

**(Non-aqueous Electrolyte Solution Preparation)**

A non-aqueous electrolyte solution for a lithium secondary battery was prepared by dissolving $LiPF_6$ in a solvent, in which ethylene carbonate (EC) and ethyl methyl carbonate (EMC) were mixed in a volume ratio of 3:7, such that a concentration of the $LiPF_6$ was 1 M.

**(Secondary Battery Preparation)**

A lithium secondary battery was prepared in the same manner as in Example 1 except that the above-prepared non-aqueous electrolyte solution was injected instead of the inorganic electrolyte.

**Experimental Examples**

**Experimental Example 1. Initial Capacity Characteristics Evaluation**

After formation was performed on each of the lithium secondary battery prepared in Example 1 and the lithium secondary batteries prepared in Comparative Examples 1 and 2 at a current of 37 mA (0.1 C rate), each lithium secondary battery was charged at 0.1 C rate under a constant current condition to 0.005 V and discharged at 0.1 C rate to 2.0 V. In this case, after the above charging and discharging were defined as one cycle and two cycle were performed, specific capacity of the secondary battery was measured using charge/discharge equipment (manufacturer: TOYO, 5 V), and the measured specific capacity was set as initial specific capacity and presented in FIGS. 1 to 3. In this case, in FIGS. 1 to 3, a rising curve (solid line) of the specific capacity denotes initial charge capacity, and a falling curve (dotted line) of the specific capacity denotes initial discharge capacity.

Then, coulombic efficiencies (CE) were calculated by using the initial specific capacities of the secondary batteries prepared in Example 1 and Comparative Examples 1 and 2, and resulting values are presented in Table 1 below. In this case, the coulombic efficiency (%) is a value calculated using Equation 1 below.

[Equation 1]

Coulombic efficiency(%) = (discharge capacity after two cycles/charge capacity after two cycles) × 100

[Table 1]

| | Coulombic efficiency (%) |
|---|---|
| Example 1 | 98 |
| Comparative Example 1 | 46.6 |
| Comparative Example 2 | 92.8 |

Referring to FIG. 1 and Table 1, since irreversible capacity of the secondary battery of Example 1 using the pre-lithiated negative electrode and the inorganic electrolyte ($LiAlCl_4$-$3SO_2$) was reduced, it may be understood that initial discharge capacity was 153.29 mAh/g, and coulombic efficiency was 98%. In contrast, referring to FIG. 2 and Table 1, initial discharge capacity and coulombic efficiency of the secondary battery of Comparative Example 1 including the non-pre-lithiated negative electrode and the inorganic electrolyte were 73.8 mAh/g and 46.6%, respectively, wherein it may be understood that these values were reduced in comparison to those of the secondary battery of Example 1. Also, referring to FIG. 3 and Table 1, initial discharge capacity and coulombic efficiency of the secondary battery of Comparative Example 2, which included the pre-lithiated negative electrode and the electrolyte solution including the typical carbonate-based organic solvent, were 144.17 mAh/g and 92.8%, respectively, wherein it may be understood that these values were reduced in comparison to those of the secondary battery of Example 1.

**Experimental Example 2. Cycle Capacity Evaluation**

After formation was performed on each of the lithium secondary battery prepared in Example 1 and the lithium secondary battery prepared in Comparative Example 1 at a current of 37 mA (0.1 C rate), each lithium secondary battery was charged at 0.1 C rate under a constant current condition to 0.005 V and discharged at 0.1 C rate to 2.0 V. After the above charging and discharging were defined as one cycle and two cycle were performed, initial discharge capacity was measured using PNE-0506 charge/discharge equipment (manufacturer: PNE SOLUTION Co., Ltd., 5 V, 6 A).

Then, after 50 cycles were performed under the above charge and discharge conditions, charge capacities and discharge capacities after 50 cycles were measured using charge/discharge equipment (manufacturer: TOYO, 5 V). Capacity retentions (%) after 50 cycles were calculated using the following Equation 2, and the results thereof are presented in FIGS. 4 and 5. Also, coulombic efficiencies of the lithium secondary batteries prepared in Example 1 and Comparative Example 1 were calculated using the following Equation 3, and resulting values are presented in FIGS. 4 and 5.

[Equation 2]

Capacity retention(%) = (discharge capacity after 50 cycles/initial discharge capacity) × 100

[Equation 3]

Coulombic efficiency(%) = (discharge capacity after 50 cycles/charge capacity after 50 cycles) × 100

Referring to FIG. 4, it may be understood that the secondary battery of Example 1 including the pre-lithiated negative electrode and the inorganic electrolyte ($LiAlCl_4$-$3SO_2$) had a capacity retention after 50 cycles of 81.5% and a coulombic efficiency of 100%.

In contrast, referring to FIG. 5, the secondary battery of Comparative Example 1 including the non-pre-lithiated negative electrode and the inorganic electrolyte had a capacity retention after 50 cycles of 8.1% and a coulombic efficiency of 95%, wherein it may be understood that these values were reduced in comparison to those of the secondary battery of Example 1.

## Claims

**1.** A lithium secondary battery, comprising:

a pre-lithiated carbon-based negative electrode;
a positive electrode;
a separator; and
an inorganic electrolyte represented by Formula 1:

[Formula 1]
$LiMX_n (SO_2)$
wherein, in Formula 1,
M is at least one metal selected from an alkali metal, a transition metal, and a post-transition metal,
X is a halogen element, and

n is an integer of 1 to 4.

**2.** The lithium secondary battery of claim 1, wherein 30% to 90% of capacity based on total capacity of a negative electrode active material of the pre-lithiated carbon-based negative electrode is lithiated by pre-lithiation.

**3.** The lithium secondary battery of claim 1, wherein the positive electrode comprises a lithium transition metal phosphate.

4. The lithium secondary battery of claim 1, wherein, in Formula 1, M is at least one metal selected from the group consisting of aluminum (Al), gallium (Ga), copper (Cu), manganese (Mn), cobalt (Co), nickel (Ni), zinc (Zn), and palladium (Pd), and the halogen element is at least one selected from the group consisting of fluorine (F), chlorine (Cl), bromine (Br), and iodine (I).

5. The lithium secondary battery of claim 1, wherein the inorganic electrolyte comprises $LiAlCl_4$-$3SO_2$.

6. A method of preparing the lithium secondary battery of claim 1, the method comprising:

preparing a pre-lithiated carbon-based negative electrode;
sequentially stacking the pre-lithiated carbon-based negative electrode, a separator, and a positive electrode to form an electrode assembly; and
inserting the electrode assembly into a battery case and injecting an inorganic electrolyte represented by Formula 1,
[Formula 1]
LiMX_n ($SO_2$)
wherein, in Formula 1,
M is at least one metal selected from an alkali metal, a transition metal, and a post-transition metal,
X is a halogen element, and
n is an integer of 1 to 4.

7. The method of claim 6, wherein the preparing of the pre-lithiated carbon-based negative electrode comprises:

preparing a negative electrode by stacking a carbon-based negative electrode active material layer on a negative electrode collector;
preparing a pre-lithiation solution;
impregnating the negative electrode in the pre-lithiation solution;
preparing a negative electrode stack for pre-lithiation by sequentially stacking a separator and a lithium metal, as a counter electrode, on the negative electrode; and
preparing a pre-lithiated carbon-based negative electrode by performing a pre-lithiation process on the negative electrode stack for pre-lithiation.

8. The method of claim 7, wherein the pre-lithiation solution comprises a lithium salt and an organic solvent.

9. The method of claim 7, wherein the impregnating is performed at a temperature of 10°C to 75°C for 30 minutes to 48 hours.

10. The method of claim 7, wherein the pre-lithiation process is performed by connecting the negative electrode active material layer of the negative electrode stack and the lithium metal together using a wire or a copper foil and inducing a short-circuit through the wire or the copper foil in the pre-lithiation solution.

11. The method of claim 7, wherein the pre-lithiation process is performed at 10°C to 35°C for 30 minutes to 2 hours.

FIG. 1

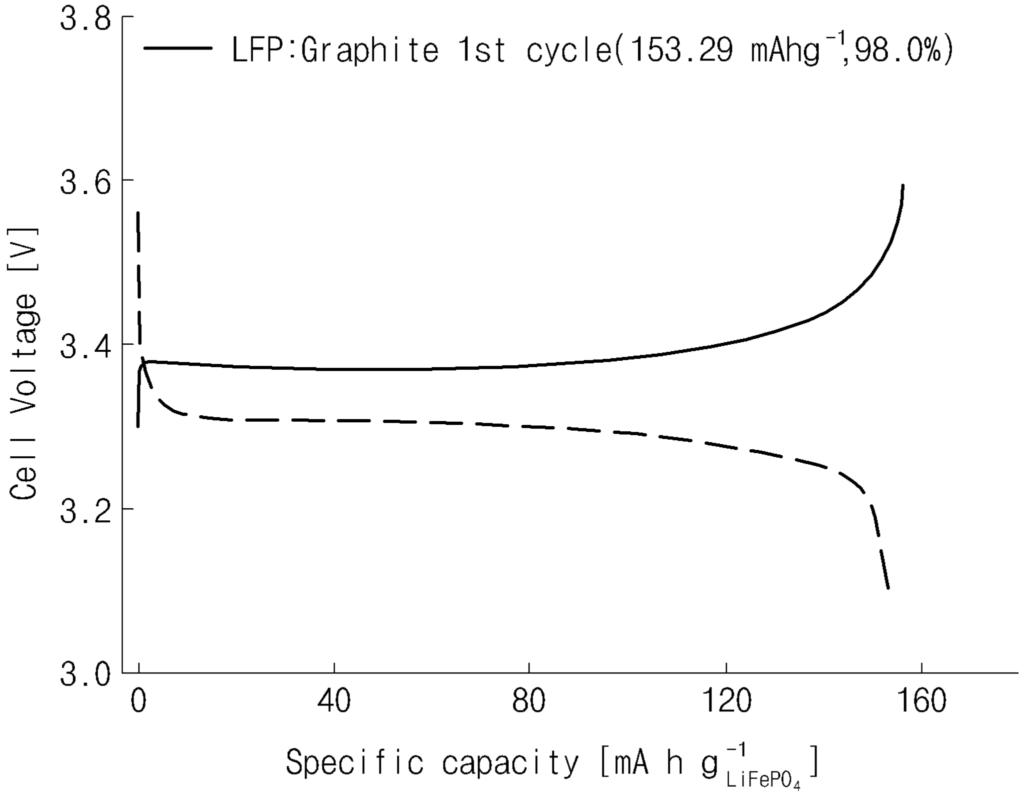
LFP:Graphite 1st cycle(153.29 mAhg⁻¹,98.0%)
Cell Voltage [V]
3.8
3.6
3.4
3.2
3.0
0
40
80
120
160
Specific capacity [mA h g$^{-1}_{LiFePO_4}$]

FIG. 2

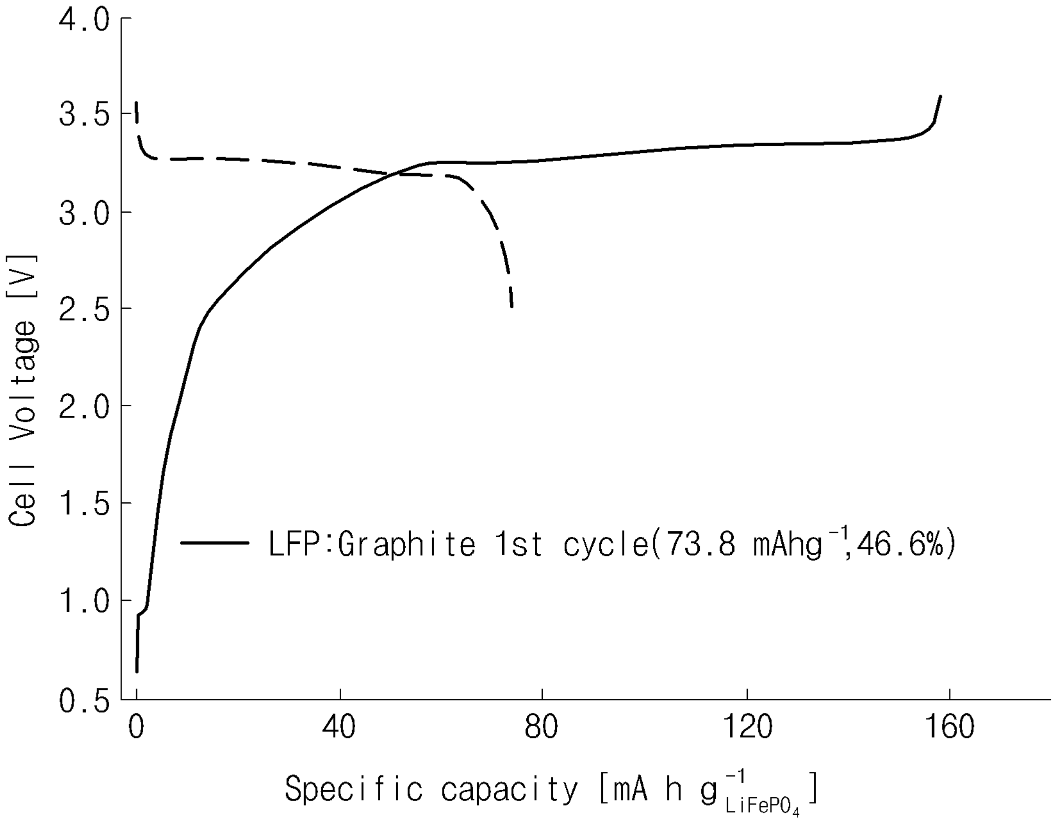
4.0
3.5
3.0
2.5
2.0
1.5
1.0
0.5
Cell Voltage [V]
LFP:Graphite 1st cycle(73.8 mAhg$^{-1}$,46.6%)
0
40
80
120
160
Specific capacity [mA h $g^{-1}_{LiFePO_4}$]

FIG. 3

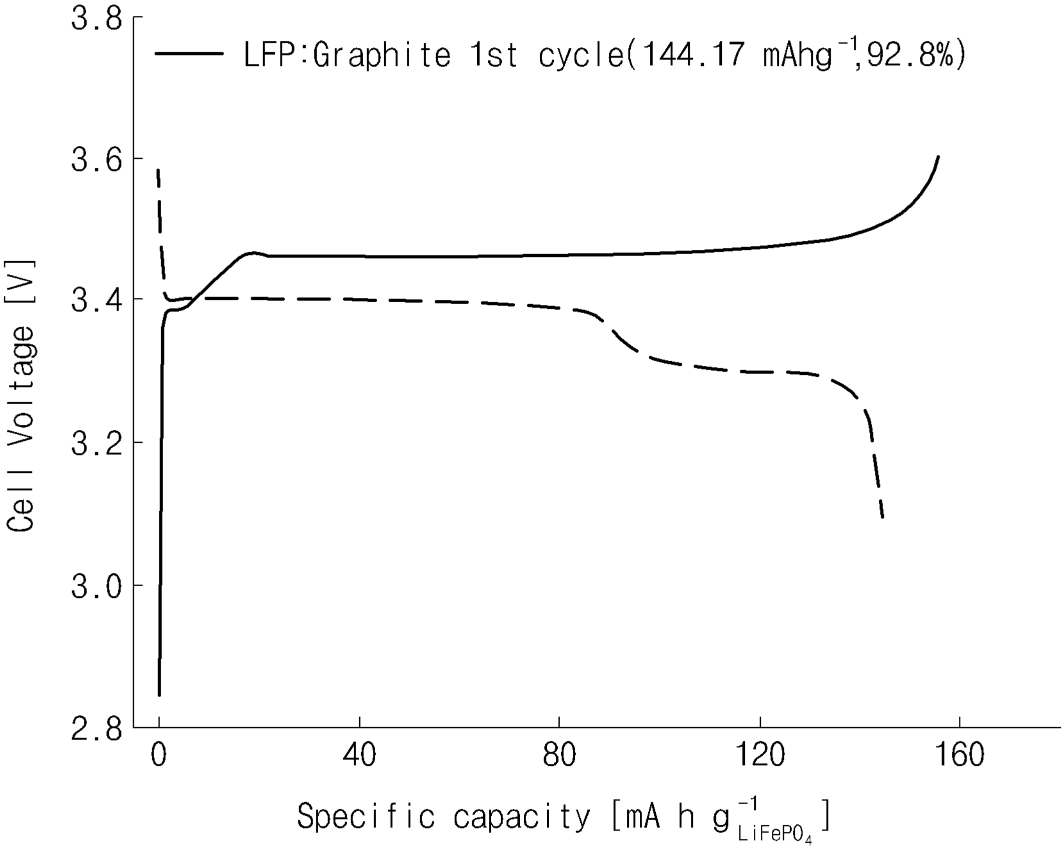

3.8
3.6
3.4
3.2
3.0
2.8
Cell Voltage [V]
LFP:Graphite 1st cycle(144.17 mAhg-1,92.8%)
0
40
80
120
160
Specific capacity [mA h g-1 LiFePO4]

FIG. 4

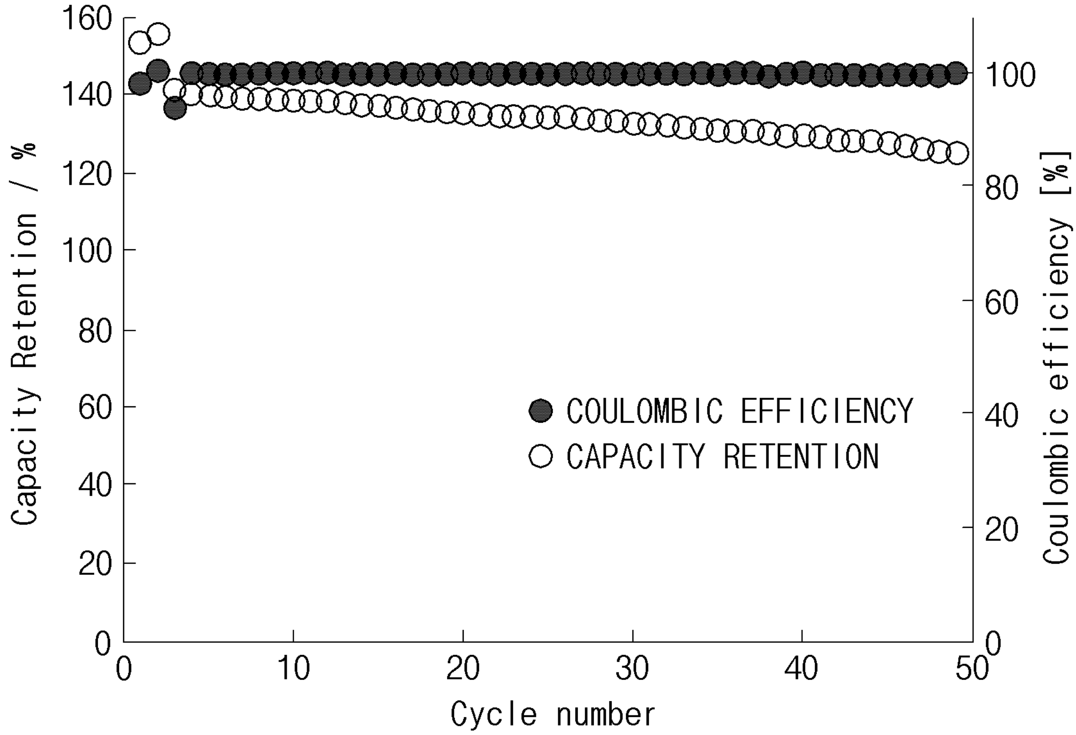
Capacity Retention / %
Coulombic efficiency [%]
Cycle number
COULOMBIC EFFICIENCY
CAPACITY RETENTION
0
20
40
60
80
100
120
140
160
0
10
20
30
40
50

FIG. 5

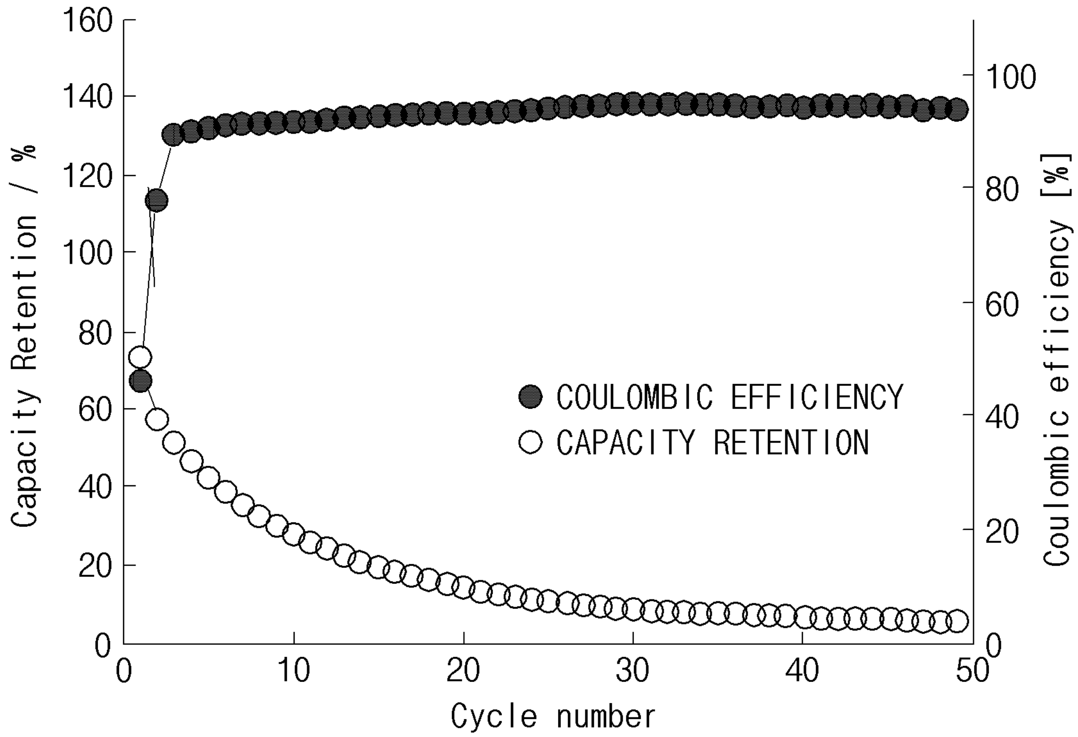
160
140
120
100
80
60
40
20
0
Capacity Retention / %
100
80
60
40
20
0
Coulombic efficiency [%]
COULOMBIC EFFICIENCY
CAPACITY RETENTION
0
10
20
30
40
50
Cycle number

FIG. 6

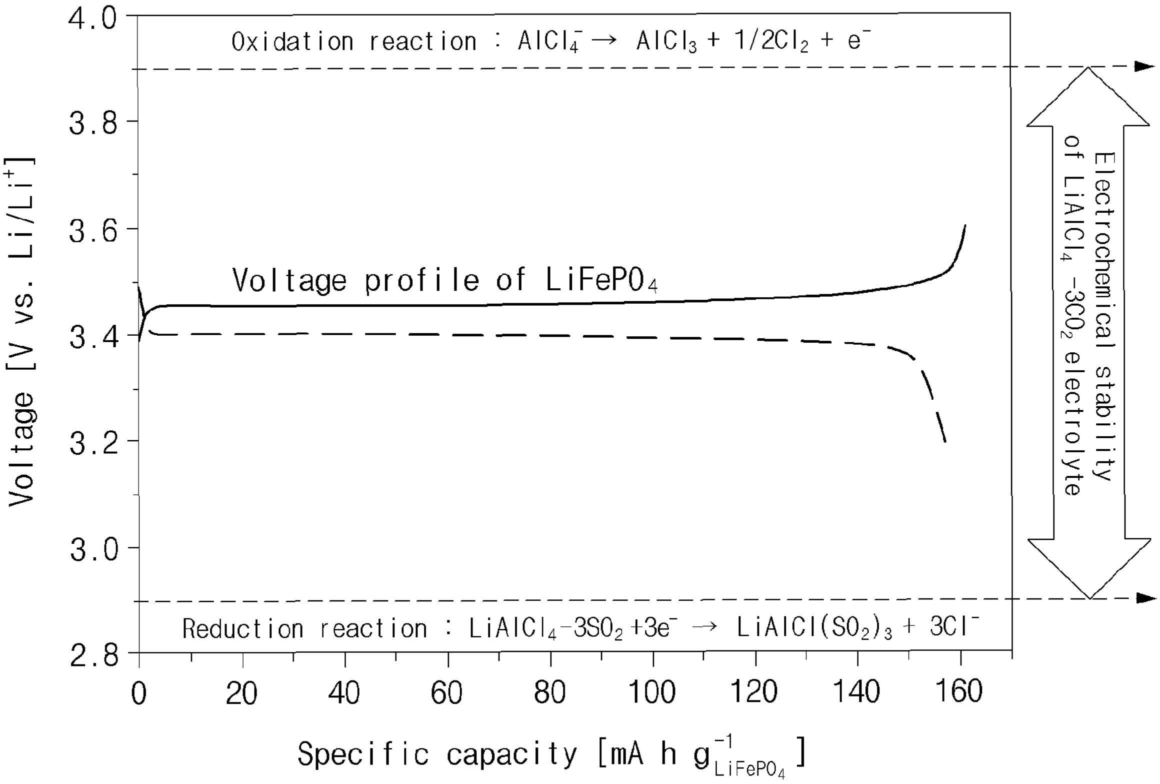
4.0
3.8
3.6
3.4
3.2
3.0
2.8
Voltage [V vs. Li/Li+]
Oxidation reaction : AlCl4- → AlCl3 + 1/2Cl2 + e-
Voltage profile of LiFePO4
Reduction reaction : LiAlCl4-3SO2 +3e- → LiAlCl(SO2)3 + 3Cl-
0
20
40
60
80
100
120
140
160
Specific capacity [mA h g-1 LiFePO4]
Electrochemical stability
of LiAlCl4 -3CO2 electrolyte

**INTERNATIONAL SEARCH REPORT**

International application No.
**PCT/KR2020/011338**

**A. CLASSIFICATION OF SUBJECT MATTER**

**H01M 10/0563**(2010.01)i; **H01M 4/587**(2010.01)i; **H01M 4/1393**(2010.01)i; **H01M 4/04**(2006.01)i; **H01M 4/58**(2010.01)i; **H01M 10/0525**(2010.01)i

According to International Patent Classification (IPC) or to both national classification and IPC

**B. FIELDS SEARCHED**

Minimum documentation searched (classification system followed by classification symbols)

H01M 10/0563(2010.01); H01M 10/052(2010.01); H01M 10/0525(2010.01); H01M 10/0561(2010.01); H01M 10/0585(2010.01); H01M 10/36(2006.01); H01M 10/44(2006.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 전리튬화(pre-lithiation), 탄소(carbon), 음극(anode), 무기 전해질(inorganic electrolyte)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0078525 A (LG CHEM, LTD.) 04 July 2019 (2019-07-04)<br>See claims 1, 5 and 10; and paragraphs [0032], [0050], [0051], [0071] and [0090]-[0092]. | 1-11 |
| Y | KR 10-2019-0034972 A (IUCF-HYU (INDUSTRY-UNIVERSITY COOPERATION FOUNDATION HANYANG UNIVERSITY)) 03 April 2019 (2019-04-03)<br>See claim 3. | 1-11 |
| Y | KR 10-2015-0014877 A (LG CHEM, LTD.) 09 February 2015 (2015-02-09)<br>See paragraphs [0023] and [0039]-[0049]. | 3,7-9,11 |
| Y | 김혜진 등. 제어가능한 전리튬화를 통한 실리콘 옥사이드 음극재의 초기효율 향상에 관한 연구. 한국공업화학회 춘계 연구 논문 초록. 2016, p. 22. non-official translation (KIM, Hye Jin et al. A Study on the Improvement of Initial Efficiency of Silicone Oxide Negative Material by Controllable Pre-Lithiation. Abstracts of Spring Research Thesis of The Korean Society of Industrial and Engineering Chemistry.).<br>See abstract. | 10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 December 2020** | **02 December 2020** |
| Name and mailing address of the ISA/KR<br>**Korean Intellectual Property Office**<br>**Government Complex Daejeon Building 4, 189, Cheongsa-ro, Seo-gu, Daejeon, 35208, Republic of Korea** | Authorized officer |
| Facsimile No. **+82-42-481-8578** | Telephone No. |

Form PCT/ISA/210 (second sheet) (July 2019)

INTERNATIONAL SEARCH REPORT

International application No.
**PCT/KR2020/011338**

**C. DOCUMENTS CONSIDERED TO BE RELEVANT**

| Category* | Citation of document, with indication, where appropriate, of the relevant passages | Relevant to claim No. |
|---|---|---|
| A | JP 2009-252489 A (TOYOTA MOTOR CORP.) 29 October 2009 (2009-10-29)<br>See entire document. | 1-11 |

Form PCT/ISA/210 (second sheet) (July 2019)

**INTERNATIONAL SEARCH REPORT**
**Information on patent family members**

International application No.
**PCT/KR2020/011338**

| Patent document cited in search report | Publication date (day/month/year) | Patent family member(s) | Publication date (day/month/year) |
|---|---|---|---|
| KR 10-2019-0078525 A | 04 July 2019 | None | |
| KR 10-2019-0034972 A | 03 April 2019 | WO 2019-059440 A1 | 28 March 2019 |
| KR 10-2015-0014877 A | 09 February 2015 | KR 10-1594784 B1 | 17 February 2016 |
| JP 2009-252489 A | 29 October 2009 | CA 2719529 A1 | 08 October 2009 |
| | | CA 2719529 C | 30 July 2013 |
| | | CN 101981732 A | 23 February 2011 |
| | | EP 2260527 A1 | 15 December 2010 |
| | | EP 2260527 B1 | 24 June 2020 |
| | | JP 4725594 B2 | 13 July 2011 |
| | | US 2011-0104564 A1 | 05 May 2011 |
| | | US 8586237 B2 | 19 November 2013 |
| | | WO 2009-122266 A1 | 08 October 2009 |
| | | WO 2009-122266 A8 | 08 October 2009 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20190104733
- KR 20200106330
- KR 20190007296
- KR 20170111513